Europäisches Patentamt

European Patent Office

Office européen des brevets

(19)

(11) Veröffentlichungsnummer : **0 482 339 B1**

(12)
# EUROPÄISCHE PATENTSCHRIFT

(45) Veröffentlichungstag der Patentschrift :
**10.11.93 Patentblatt 93/45**

(51) Int. Cl.$^5$ : **B01J 20/26, B01D 15/08**

(21) Anmeldenummer : **91115506.7**

(22) Anmeldetag : **13.09.91**

(54) **Hochvernetztes, perlförmiges, aktivierbares, hydrophiles Trägermaterial.**

(30) Priorität : **15.09.90 DE 9013137 U**

(43) Veröffentlichungstag der Anmeldung :
**29.04.92 Patentblatt 92/18**

(45) Bekanntmachung des Hinweises auf die
Patenterteilung :
**10.11.93 Patentblatt 93/45**

(84) Benannte Vertragsstaaten :
**AT BE CH DE DK ES FR GB IT LI NL SE**

(56) Entgegenhaltungen :
**EP-A- 0 190 495**
**EP-A- 0 296 926**
**GB-A- 2 061 954**

(73) Patentinhaber : **RÖHM GMBH**
**Kirschenallee**
**D-64293 Darmstadt (DE)**

(72) Erfinder : **Göldner, Ernst, Dr.**
**Hauffstrasse 2**
**W-7940 Riedlingen (DE)**
Erfinder : **Krämer, Dieter, Dr.**
**An der Favorite 4**
**W-6500 Mainz (DE)**
Erfinder : **Artmann, Ursula**
**Steingasse 8c**
**W-6101 Bickenbach (DE)**
Erfinder : **Zwara, Dieter**
**Teichweg 21**
**W-6107 Reinheim 1 (DE)**

**Beschreibung**

Die Erfindung betrifft ein hochvernetztes, perlförmiges, aktivierbares, hydrophiles Trägermaterial mit makroporöser Struktur, das entweder als solches adsorptiv als Träger für biologisch aktive Stoffe dienen kann oder das mittels eines bifunktionellen Aktivierungsmittels in einen gegenüber biologisch aktiven Stoffen bindungsaktiven Zustand versetzt und mit einem solchen Stoff umgesetzt werden kann.

Aus der GB-A 1 004 669 ist ein vernetztes, perlförmiges, hydrophiles Trägermaterial auf Basis eines Copolymers eines hydrophilen, äthylenisch ungesättigten, radikalisch polymerisierbaren Monomeren mit einem mehrfunktionellen Vernetzungsmonomeren bekannt; das hydrophile Monomer ist Acrylamid. N,N'-Methylen-bis-(meth)acrylamid wird als vernetzendes Monomer in einem Anteil bis 10 Gew.-%, gegebenenfalls bis zu 20 Gew.-%, eingesetzt, wodurch ein gelartig quellbares Polymer erhalten wird.

Gemäß DE-A 1 954 349 werden die Körnchen derartiger hydrophiler Trägermaterialien durch ein steifes, hydrophiles, makroporöses Material verstärkt, das aus den gleichen Monomeren aufgebaut sein kann, jedoch durch einen zwischen 30 und 90 Gew.-% liegenden Anteil des N,N'-Methylen-bis-(meth)acrylamids hochvernetzt ist. Am Aufbau des verstärkenden Materials können auch hydroxylgruppenhaltige Acrylamidderivate, wie N-(Hydroxymethyl)acrylamid beteiligt sein. Die starke Vernetzung erhöht die Steifigkeit im wassergequollenen Zustand, was sich vorteilhaft auswirkt, wenn ein damit gefüllten Säulenreaktor von einem flüssigen Substrat durchströmt wird.

Aus der GB-A 2061954 ist ein hochvernetztes, hydrophiles, perlförmiges, mechanisch stabiles und in einer Säulenfüllung gut durchströmbares Trägermaterial für die Größenausschluß-Chromatographie bekannt; beispielsweise mit Epichlorhydrin vernetzter Polyvinyl- oder Polyallylalkohol. Da das Polymer keine hydrolyseempfindlichen Bindungen enthält, ist es alkalistabil und dauerhaft neutral. Es wird jedoch durch ein mehrstufiges Verfahren hergestellt.

Aufgabe und Lösung

Der Erfindung liegt die Aufgabe zugrunde, ein perlförmiges Trägermaterial herzustellen, das gleichzeitig die Forderungen nach hoher Hydrophilie, nach leichter Aktivierbarkeit, nach hoher Steifigkeit im wassergesättigten Zustand und nach hoher Hydrolysebeständigkeit in wäßrig-alkalischen Medien erfüllt und auf einfache Weise in einer Verfahrensstufe herstellbar ist.

Eine Lösung der gestellten Aufgabe wurde in einem hochvernetzten, perlförmigen, aktivierbaren, hydrophilen Trägermaterial auf Basis eines Copolymers aus

a) einem Allylmonomer der Formel

$$CH_2=CH-CH_2-O-R-X_n$$

worin entweder R ein Wasserstoffatom und n=0 ist, oder R einen (n+1)-wertigen aliphatischen Kohlenwasserstoffrest mit 1 bis (n+4) Kohlenstoffatomen bedeutet, X gleiche oder verschiedene hydrophile Reste aus der Gruppe von Hydroxylgruppen oder Resten $-(O-R')_m-OH$ sind, in welchen R' ein Ethylen- oder Propylenrest ist und m eine Zahl von 1 bis 45 ist, und n eine Zahl zwischen 1 und 5 ist,

b) 10 bis 90 Gew.%, bezogen auf das Gewicht des Copolymers, eines mehrfunktionellen Monomeren, in welchem wenigstens zwei äthylenisch ungesättigte, radikalisch polymerisierbare Gruppen durch eine Carbonamidgruppen enthaltende Kette verbunden sind,

das durch Perlpolymerisation in umgekehrter Phase hergestellt worden ist, wobei eine wäßrige oder wäßrig-alkoholische Lösung der Monomeren in einem mit Wasser nicht unbegrenzt mischbaren organischen Medium zu Tröpfchen verteilt und in dieser Form mittels eines radikalbildenden Initiators zur Polymerisation gebracht wird.

Es wurde festgestellt, daß sich die geforderte hohe Hydrolysebeständigkeit erfüllen läßt, wenn als hydrophile Komponente des Copolymers die genannten Allylmonomeren und als vernetzende Komponente Monomere mit Carbonamid bindungen eingesetzt werden. Sind die hydrophilen Gruppen oder die Vernetzungsbrücken dagegen durch leichter hydrolysierbare Bindungen, wie Estergruppen, an das Polymer gebunden, so können sie hydrolytisch abgespalten werden und lassen eine anionische Carboxylatgruppe zurück, die den elektrochemischen Zustand der Polymermatrix tiefgreifend verändert. Die erfindungsgemäß eingesetzten Allylmonomeren enthalten keine hydrolyseempfindlichen Gruppierungen. Die in den vernetzenden Einheiten enthaltenen Carbonamidgruppen erweisen sich als weitgehend hydrolysestabil.

Die in den polymerisierten Einheiten des Allylmonomers enthaltenen Hydroxylgruppen bewirken einerseits die erforderliche Hydrophilie des Polymeren und bieten andererseits einen Ansatzpunkt für eine chemische Aktivierung. So erhält man z.B. durch Umsetzung des Polieren mit einer Bis-epoxy-Verbindung eine gegenüber biologisch aktiven Stoffen reaktionsfähige, polymergebundene Oxirangruppe. Weder diese Gruppe noch ein später daran gebundenes Substrat können durch alkalische Hydrolyse abgespalten werden.

Ausführung der Erfindung

Zu den formelmäßig gekennzeichneten Allylmonomeren gehören Allylalkohol und bestimmte Allylether. Sie können eine oder mehrere Hydroxylgruppen enthalten und wirken dadurch unterschiedlich stark hydrophilierend. Die Zahl der Kohlenstoffatome in dem aliphatischen Kohlenwasserstoffrest R soll, um eine hohe Hydrophilie zu gewährleisten, nicht wesentlich größer als die Zahl der daran gebundenen Hydroxylgruppen sein, was durch die Begrenzung auf n+4 Kohlenstoffatome pro n Hydroxylgruppen zum Ausdruck kommt. Die Hydroxylgruppen brauchen nicht unmittelbar an den aliphatischen Kohlenwasserstoffrest R gebunden zu sein, sondern können über Oxyalkylen- oder Polyoxyalkylenreste verknüpft sein.

Den Allylethern liegen mehrwertige aliphatische Alkohole zugrunde, in denen eine Hydroxylgruppe mit Allylalkohol veräthert ist, während eine oder mehrere weitere Hydroxylgruppen als solche oder in oxalkylierter Form vorliegen. Vorzugsweise leiten sie sich von wenigstens dreiwertigen Alkoholen, insbesondere von Glycerin ab. Der zugrundeliegende aliphatische Alkohol enthält höchstens 4 Kohlenstoffatome mehr als Hydroxylgruppen. Diese können mit 1 bis 45, vorzugsweise 1 bis 10 Mol Ethylenoxid oder Propylenoxid umgesetzt sein. Außer dem schon erwähnten Glycerin sind als Beispiele für mehrwertige aliphatische Alkohole Ethylenglykol, Propylenglykol, Diethylenglykol, Triethylenglykol und höhere Polyethylen- oder Polypropylenglykole, Glycerin, Sorbit, Mannit und ähnliche Zuckeralkohole zu nennen. 3-Allyloxy-1,2-propandiol ist der bevorzugte Allylether.

Zur Vernetzung des Polymeren wird ein mehrfunktionelles Monomer verwendet, in welchem wenigstens zwei äthylenisch ungesättigte, radikalisch polymerisierbare Gruppen durch eine Carbonamid gruppen enthaltende Kette verbunden sind. N,N'-Methylen-bis-acrylamid und -methacrylamid sind unter den Carbonamidgruppen enthaltenden Vernetzungsmonomeren bevorzugt.

Vorzugsweise ist das Polymer nur aus der hydrophilen und der vernetzenden Monomerkomponente aufgebaut. Weitere Comonomere können mitverwendet werden, sofern sie nicht die Hydrophilie oder die Alkalibeständigkeit unzulässig vermindern. Daher werden Comonomere mit längeren aliphatischen oder mit aromatischen Resten oder von ungesättigten Carbonsäuren abgeleitete Comonomere mit Ester- oder primären Amidgruppen möglichst vermieden.

Der Anteil der Allylmonomeren am Gewicht des Polymeren liegt vorzugsweise zwischen 10 und 90, insbesondere zwischen 10 und 80 Gew.-% und der Anteil des mehrfach ungesättigten Vernetzungsmonomeren zwischen 90 und 10, insbesondere zwischen 90 und 20 Gew.-%.

Herstellung des Copolymers

Das hochvernetzte, perlförmige, aktivierbare, hydrophile Trägermaterial gemäß der Erfindung wird nach dem an sich bekannten Verfahrensprinzip der Perlpolymerisation in umgekehrter Phase hergestellt. Dazu wird eine wäßrige oder wäßrig-alkoholische Lösung der Monomeren in einem mit Wasser nicht unbegrenzt mischbaren organischen Medium, wie Benzinkohlenwasserstoffen, Chlorkohlenwasserstoffen, Toluol oder deren Gemischen, zu Tröpfchen von 5 bis 1000 µm Durchmesser verteilt und in dieser Form durch Zugabe eines radikalbildenden Initiators und gegebenenfalls Erwärmen zur Polymerisation gebracht. Zur Stabilisierung des tröpfchenförmigen Verteilungszustandes während der Polymerisation werden üblicherweise makromolekulare Verteilungsmittel verwendet. Der bevorzugte mittlere Teilchendurchmesser, ausgedrückt als Gewichtsmittelwert, beträgt 3 bis 1000, vorzugsweise 5 bis 200 µm; er wird durch die Menge und die Wirksamkeit dieses Verteilungsmittels und durch die Rührbedingungen bei der Herstellung der Suspension bestimmt.

Geeignete makromolekulare Verteilungsmittel sind Copolymere aus hydrophoben und hydrophilen Monomeren in einem solchen Mengenverhältnis, daß das Copolymer eine ausreichende Affinität zu beiden Phasen der Monomersuspension hat. Diese Affinität kann dadurch erreicht werden, daß ein Block- oder Pfropfcopolymer verwendet wird, das aus unterschiedlichen Polymerketten zusammengesetzt ist, wobei die Polymerketten so gewählt worden sind, daß sie in isolierter Form zum einen Teil in der Monomerlösung und zum anderen Teil in dem organischen Medium löslich wären. Oft genügt es allerdings auch, ein statistisches Copolymer einzusetzen, das aus einem Gemisch von wenigstens zwei Monomeren unterschiedlicher Polarität hergestellt ist. Auch hier ist die Auswahl so zu treffen, daß Polymerisate des einen Monomeren in der wäßrigen Monomerlösung und Polymerisate des anderen Monomeren in dem organischen Medium löslich wären. Für die Polymerisation in einem Benzinkohlenwasserstoff als organischem Medium eignet sich beispielsweise ein Copolymer aus einem größeren Anteil eines höheren Alkylmethacrylats und einem geringeren Anteil eines Hydroxyalkylacrylats.

Als Initiatoren, um die Polymerisation in der suspendierten Momomerphase auszulösen, können übliche Peroxid- oder Azoinitiatoren eingesetzt werden. Geeignet sind z.B. Azo-bis-cyanvaleriansäure oder Dibenzoylperoxid. Die Menge des Initiators und die zur Auslösung der Polymerisation geeignete Temperatur werden nach fachüblichen Bedingungen gewählt. In der Regel wird die Polymerisation bei 40 bis 100°C durchgeführt.

Bekannte Verfahren zur Herstellung von hochvernetzten, perlförmigen, aktivierbaren, hydrophilen Trägermaterialien mit makroporöser Struktur, die zur Herstellung der erfindungsgemäßen Polymeren sinngemäß angewendet werden können, sind z.B. im deutschen Patent 27 22 751 und im EP-B 58 767 beschrieben.

Anwendung des perlförmigen Trägermaterials

Das Material kann ansatzweise verwendet werden, indem es in einem vorzugsweise wäßrigen Medium suspendiert und unter Rühren mit einem in dem Medium gelösten Substrat zur Wechselwirkung gebracht wird. Das Trägermaterial kann anschließend abfiltriert und in einem anderen Medium weiterbehandelt oder regeneriert werden.

Wegen seiner ausgeprägten mechanischen Festigkeit im wassergesättigten Zustand eignet sich das Trägermaterial bevorzugt zur Anwendung in Säulenreaktoren. Die Wasseraufnahme erreicht bei Sättigung Werte von 200 bis 500 Gew.-%, bezogen auf das Trockengewicht des Trägermaterials; seine Quellung, insbesondere im Temperaturbereich von 0 bis 60°C, bleibt in der Regel unter 200 Vol.-%. Der Ausdruck "wassergesättigt" besagt demnach nur, daß der Wassergehalt einen konstanten Gleichgewichtswert erreicht hat.

Infolge seiner stark hydrophilen Eigenschaften, bzw. seiner geringen Resthydrophobie zeichnet sich das erfindungsgemäße Trägermaterial durch eine besonders geringe hydrophobe Wechselwirkung mit Biomolekülen aus. Aus diesem Grund kann es mit Vorteil für zahlreiche Verfahren der Festphasen-Biotechnologie verwendet werden. Festphasen dienen zur Abtrennung reiner Biomoleküle hochmolekularer oder niedermolekularer Struktur aus Gemischen. Desweiteren dienen sie als Träger für immobilisierte Biomoleküle, insbesondere Enzyme, oder als Oberfläche für analytische Verfahren, z.B. Immuno-Assays, oder als Biosensoren. Eine Gruppe wichtiger Trenntechniken von Biomolekülen wird unter dem Begriff der Flüssig-Chromatographie zusammengefaßt. Bei diesen Techniken ist ein durchströmbares Rohr mit der Festphase gefüllt. Die Trennung von Biomolekülen aus ihren wäßrigen Gemischen erfolgt unmittelbar beim Durchströmen dieses gefüllten Rohres.

Die erfindungsgemäßen Träger eignen sich beispielsweise für die Trenntechnik der Gelpermeationschromatographie (GPC). Dabei werden die Moleküle eines Gemisches nur aufgrund ihrer unterschiedlichen Größe getrennt. Kleine Moleküle können in kleinere Poren des Trägermaterials eindringen als größere Moleküle, so daß die ersteren ein größeres Volumen durchwandern als die letzteren. Moleküle, die größer als die größten Poren sind, wandern nur in den freien Zwischenräumen zwischen den Teilchen des Trägermaterials und werden daher als erste eluiert.

Bei einer anderen Klasse von Anwendungsverfahren wird das erfindungsgemäße Trägermaterial in chemisch modifizierter Form eingesetzt. Zu diesem Zweck werden geeignete Liganden kovalent an das Polymer, vorzugsweise an die Hydroxylgruppen gebunden. Bevorzugt sind Bindungsverfahren, die nicht zur Bildung von hydrolysierbaren Bindungen führen. Daher sind acylierende Modifizierungsmittel meistens weniger geeignet als solche, die zur Bildung von Etherbindungen führen. Dies gilt für alle klassischen Alkylierungsverfahren. Besonders bevorzugt ist die Umsetzung mit Epoxidgruppen enthaltenden Modifizierungsmitteln, die durch Reaktion mit Hydroxylgruppen β-Hydroxyalkylethergruppen bilden. Eine universell anwendbare Modifizierungsmethode besteht in der Umsetzung des Trägers mit einem Bisepoxid, wobei sich die eine Epoxidgruppe an eine Hydroxylgruppe des Trägers anlagert, während die andere für weitere Umsetzungen mit Biomolekülen zur Verfügung steht.

In dieser Weise mit Biomolekülen modifizierte Träger eignen sich z.B. für die sogenannte Affinitätschromatographie (AIC). Dafür werden Trägermaterialien benötigt, die gegenüber einem spezifischen Molekül eine möglichst hohe selektive Bindungkapazität aufweisen. Die Bindung darf indessen nicht so fest sein, daß die gebundenen Moleküle erst bei drastischen Bedingungen eluierbar sind. Träger, die diesen Forderungen entsprechen, werden allgemein als Affinitätssorbentien bezeichnet. Sie enthalten einen sogenannten Bioliganden in kovalenter Bindung an der Festphase, der das biokomplementäre Molekül spezifisch bindet und auf diese Weise in hoch gereinigter Form aus einem Gemisch abtrennt.

Ausführungsbeispiel

A. Herstellung eines perlförmigen Trägermaterials

18,75 g 3-Allyloxy-1,2-propandiol und 31,25 g N,N'-Methylen-bis-acrylamid werden in einem Gemisch aus 104,8 g Wasser und 26,2 g Methanol gelöst. Die Lösung wird in einer organischen Phase aus 473 g n-Heptan und 1,5 g eines Mischpolymerisats aus $C_{12-18}$-Alkylmethacrylaten und 2-Hydroxyethylacrylat (80/20) zu Tröpfchen suspendiert. Die Suspension wird auf 40°C erwärmt und die Polymerisation durch Zusatz von 1 g 4,4'-Azo-bis-4-cyanvaleriansäure in Gang gesetzt. Nach einer Polymerisationsdauer von 14 Stunden bei 40 - 60°C wird das entstandene Perlpolymerisat abfiltriert, gewaschen und getrocknet. Die mittlere Teilchengröße des Feuchtprodukts beträgt 40-60 Mikrometer.

B. Prüfung der Alkalibeständigkeit

Im Falle einer alkalischen Hydrolyse würden durch Spaltung von Carbonamidgruppen polymergebundene Carboxylatgruppen entstehen, die sich durch eine erhöhte Bindungswirkung gegenüber Cytochrom C bemerkbar machen würden. Durch die nachfolgend beschriebene Prüfung wird das Absorptionsverhalten vor und nach einer Alkalibehandlung bestimmt.

5 g des Perlpolymerisats werden in 50 ml 1 M NaOH aufgeschlämmt und 72 Stunden lang bei 23°C stehengelassen. Anschließend wird das Polymerisat abfiltriert und mit Wasser neutral gewaschen.

Für die Absorptionsprüfung wird eine übliche HPLC-Apparatur mit Rheodyn-Injektionsventil, Spektralphotometer und Schreiber der Firma Knauer, Bad Homburg, verwendet. Als Leersäule dient eine HR 10/10-Säule der Pharmacia -LKB, Schweden, von 100 mm Länge und 10 mm Innendurchmesser.

Folgende Lösungen werden verwendet:

Lösung I: 0,01 M $NaH_2PO_4$ + 0,1 M KCl + NaOH bis pH 7,4

Lösung II: 2 mg Cytochrom C (Fa. Merck, Nr.24804) in 1 ml Lösg.I

Die Säule wird mit einer Aufschlämmung des Perlpolymerisats in Lösung I gefüllt und nach Abschluß der Sedimentation in die HPLC-Apparatur eingesetzt. Mit Lösung I wird equilibriert, bis das Photometer bei 410 nm und einer Empfindlichkeit von 0,16 ein konstantes Signal zeigt.

Danach werden 40 Mikroliter Lösung II injiziert, bei einem Fluß von 1 ml/min chromatographiert und das reduzierte Elutionsvolumen bestimmt. Dazu wird in dem aufgezeichneten Meßdiagramm die Strecke vom Zeitpunkt der Injektion bis zum Maximum des Elutionspeaks ausgemessen und auf das Volumen umgerechnet. Durch Division durch das geometrische Bettvolumen erhält man das reduzierte Elutionsvolumen $V_{red}$ für Cytochrom C.

Aus 5 Prüfläufen mit dem unbehandelten Perlpolymerisat wurde $V_{red}$ = 0,85 ermittelt. Aus 7 Prüfläufen mit dem alkalibehandelten Perlpolymerisat ergab sich $V_{red}$ = 0,89. Da die Peakflächen innerhalb der Meßgenauigkeit von ± 5 % gleichgroß waren, kann eine Veränderung des Trägermaterials durch die Alkalibehandlung ausgeschlossen werden.

C. Gelpermeationschromatographie von Proteinen an dem Perlpolymerisat A in einer Säule

| | |
|---|---|
| Säule: | Länge 283 mm, Innendurchmesser 10 mm (Superformance[R], Merck, Darmstadt) |
| HPLC-Gerät: | Typ LKB, Pharmacia; Titanpumpe; Rheodyne[R]-Injektionsventil; Recorder. |
| Laufmittel III: | 100mM NaCl in 10 mM Na-Phosphatpuffer pH 7,2 |
| Laufmittel IV: | 500 mM NaCl in 10 mM Na-Phosphatpuffer pH 7,2 |
| Flußrate: | 0,4 ml/min |

Detektion des Eluats UV-photometrisch bei 260 nm. Die in der Tabelle aufgelisteten Proteine wurden in den angegebenen Konzentrationen in Laufmittel III gelöst.

Die Säule wird mit Laufmittel IV equilibriert. Zum Eichen werden 200 Mikroliter einer Lösung aus 400 Mikroliter 10 % $NaNO_3$-Lösung in Laufmittel IV und 25 Mikroliter einer 0,015 % DNA-Lösung aufgegeben. Sobald die Eichsubstanzen eluiert sind, wird mit Laufmittel III equilibriert und in Abständen von 20 min jeweils 200 Mikroliter der Proteinlösungen aufgegeben und das Elutionsvolumen $V_e$ bestimmt. Das Trennverhalten der Säule ergibt sich aus dem Quotienten $V_e/V_t$, worin $V_t$ das totale Säulenvolumen ist.

## Tabelle

| Eichsubstanzen: | | $V_e/V_t$ | $M_w$ |
|---|---|---|---|
| DNA | | 0,36 | $>10^7$ |
| $NaNO_3$ | | 0,93 | 85 |

Proteine:

| | | $V_e/V_t$ | $M_w$ |
|---|---|---|---|
| Ferritin | 0,05 mg/ml | 0,40 | $4,5 \times 10^5$ |
| Katalase | 10 mg/ml | 0,41 | $2,4 \times 10^5$ |
| Alkoholdehydrogenase | 5 mg/ml | 0,43 | $1,4 \times 10^5$ |
| Rinderserumalbumin | 5 mg/ml | 0,43 | $6,8 \times 10^4$ |
| Peroxidase | 5 mg/ml | 0,51 | $4,0 \times 10^4$ |
| Chymotrypsinogen A | 1 mg/ml | 0,63 | $2,5 \times 10^4$ |
| Cytochrom C | 0,5 mg/ml | 0,85 | $1,25 \times 10^4$ |

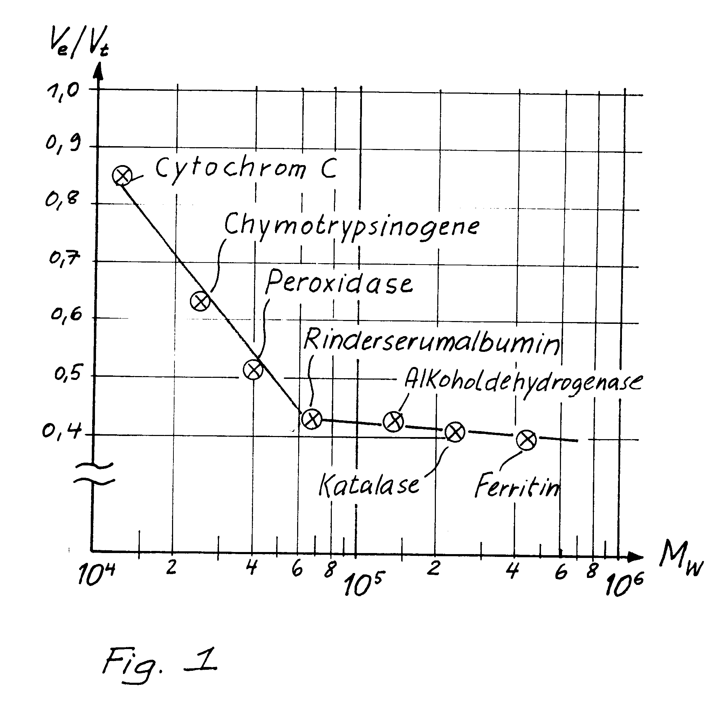

Die Ergebnisse zeigen ein sehr scharfes Trennverhalten für Proteine bis zu einem Molekulargewicht $M_w$ von $7 \times 10^4$. Sie sind in Figur 1 graphisch dargestellt.

D. Epoxidierung des Perlpolymerisats A

6 g des Perlpolymerisats A wurden in 60 ml Toluol unter Rühren mit 6,7 ml 1,4-Butandiol-diglycidylether versetzt und 22 Stunden am Rückfluß sieden gelassen. Das Produkt wurde abgesaugt, mehrfach mit Aceton aufgeschwemmt und nach 7 Stunden abgesaugt und schließlich im Vakuum getrocknet.

Bestimmung des Oxiran-Sauerstoffs nach R. Axèn (L. Sundberg, J. Porath; Journal of Chromotography, Vol.90, 1974, p.89): 0,11 Gew.-% = 68 Mikromol/Gramm.

E. Umsetzung des epoxidierten Perlpolymerisats D mit Penicillinamidase

4 ml einer Lösung von Penicillinamidase von E.coli in 0,5 M Phosphatpuffer pH 7,5 mit einer Enzymaktivität von 127,5 Units per Milliliter (Definition: 1 Unit = 1 Mikromol hydrolysiertes Penicillin-G-Kalium aus 2 %iger Lösung in 0,05 M K-Phosphatpuffer pH 7,8; 37°C; Hydrolysat-Bestimmung durch alkalimetrische Titration im pH-Stat) und 3 ml 0,5 M K-phosphatpuffer wurden auf 1 g des Perlpolymerisats D gegeben und 72 Stunden bei 23°C reagieren gelassen. Dann wurde abgesaugt, 5 mal mit je 30 ml Wasser und 2 mal mit einer Waschflüssigkeit aus 0,05 Gew.-% p-Hydroxybenzoesäuremethylester, 2 Gew.-% Isopropylalkohol und 0,1 M K-Phosphatpuffer gewaschen. Ausbeute an Feuchtprodukt: 4,3 g.

Das Umsetzungsprodukt wurde nach einer Standard-Methode (Provisional Information Sheet "EUPERGIT[(R)]-PcA, Röhm Pharma GmbH, Weiterstadt, Germany) untersucht und folgende Ergebnisse gefunden:

Aktivitätsausbeute 66 % des eingesetzten Enzyms;

Produktaktivität 78 Units je Gramm Feuchtprodukt.

## Patentansprüche

1. Hochvernetztes, perlförmiges, aktivierbares, hydrophiles Trägermaterial auf Basis eines Copolymers aus
   a) einem Allylmonomer der Formel
   $$CH_2=CH-CH_2-O-R-X_n$$
   worin entweder R ein Wasserstoffatom und n=0 ist, oder R einen (n+1)-wertigen aliphatischen Kohlenwasserstoffrest mit 1 bis (n+4) Kohlenstoffatomen bedeutet, X gleiche oder verschiedene hydrophile Reste aus der Gruppe von Hydroxylgruppen oder Resten $-(O-R')_m-OH$ sind, in welchen R' ein Ethylen- oder Propylenrest ist und m eine Zahl von 1 bis 45 ist, und n eine Zahl zwischen 1 und 5 ist,
   b) 10 bis 90 Gew.%, bezogen auf das Gewicht des Copolymers, eines mehrfunktionellen Monomeren, in welchem wenigstens zwei äthylenisch ungesättigte, radikalisch polymerisierbare Gruppen durch eine Carbonamidgruppen enthaltende Kette verbunden sind,

dadurch gekennzeichnet,
daß es durch Perlpolymerisation in umgekehrter Phase hergestellt worden ist, wobei eine wäßrige oder wäßrig-alkoholische Lösung der Monomeren in einem mit Wasser nicht unbegrenzt mischbaren organischen Medium zu Tröpfchen verteilt und in dieser Form mittels eines radikalbildenden Initiators zur Polymerisation gebracht wird.

2. Hydrophiles Trägermaterial nach Anspruch 1, dadurch gekennzeichnet, daß es mehrfunktionelle Einheiten des N,N'-Methylen-bis-(meth)acrylamids enthält.

3. Hydrophiles Trägermaterial nach Anspruch 1 oder 2, dadurch gekennzeichnet, daß die Einheiten des Allylmonomers einen Anteil von 10 bis 90 Gew.-% des Copolymeren ausmachen.

4. Hydrophiles Trägermaterial nach einem oder mehreren der Ansprüche 1 bis 3, gekennzeichnet durch eine mittlere Teilchengröße von 3 bis 1000 um.

5. Verwendungsverfahren des hydrophilen Trägermaterials nach einem oder mehreren der Ansprüche 1 bis 4, dadurch gekennzeichnet, daß es mittels eines bifunktionellen Aktivierungsmittels in einen gegenüber biologisch aktiven Stoffen bindungsaktiven Zustand versetzt und mit einem solchen Stoff umgesetzt wird.

6. Verwendung des hydrophilen Trägermaterials nach einem oder mehreren der Ansprüche 1 bis 4 zur Adsorption eines biologisch aktiven Stoffes aus einer wäßrigen Flüssigkeit.

7. Verwendungsverfahren nach Anspruch 5 oder 6, dadurch gekennzeichnet, daß das hydrophile Trägermaterial in einer durchströmbaren Säule angeordnet ist.

8. Verwendung des hydrophilen Trägermaterials nach einem oder mehreren der Ansprüche 1 bis 4 als stationäre Phase zur Größenausschluß-Chromatographie.


## Claims

1. A highly cross-linked, bead-like, hydrophilic carrier material capable of being activated, based on a copolymer consisting of
   a) an allyl monomer of Formula
$$CH_2=CH-CH_2-O-R-X_n$$
   wherein R is either a hydrogen atom and $n=0$, or R is an $(n+1)$-valent aliphatic hydrocarbon group having 1 to $(n+4)$ carbon atoms, X represents the same or different hydrophilic radicals from the group of hydroxyl groups or groups $-(O-R')_m-OH$, in which R' is an ethylene or propylene group and m is a number from 1 to 45, and n is a number between 1 and 5,
   b) 10 to 90 wt.%, based on the weight of the copolymer, of a multi-functional monomer, in which at least two ethylenically unsaturated, radically polymerisable groups are connected to a chain containing carbonamide groups,
   characterised in that it has been produced by reverse phase bead polymerisation, whereby an aqueous or aqueous-alcoholic solution of the monomers is distributed in droplet form in an organic medium incompletely miscible with water and made to polymerise in this form by means of a radical-forming initiator.

2. A hydrophilic carrier material according to claim 1, characterised in that it contains multi-functional units of N,N'-methylen-bis-(meth)acrylamide.

3. A hydrophilic carrier material according to either claim 1 or 2, characterised in that the units of the allyl monomers constitute a part of 10 to 90 wt.% of the copolymer.

4. A hydrophilic carrier material according to one or more of claims 1 to 3, characterised by an average particle size of 3 to 1,000 um.

5. A method for using the hydrophilic carrier material according to one or more of claims 1 to 4, characterised in that it is converted, by means of a bifunctional active agent, into a bond-active state with respect to biologically activating substances and reacted with such a substance.

6. Use of the hydrophilic carrier material, according to one or more of claims 1 to 4, in order to adsorb a biologically active substance from an aqueous fluid.

7. A method of use according to either claim 5 or 6, characterised in that the hydrophilic carrier material is arranged in a column through which it may pass.

8. Use of the hydrophilic carrier material, according to one or more of claims 1 to 4, as a stationary phase for size-exclusion chromatography.

**Revendications**

1. Matière de support fortement réticulée, en forme de perles, activable et hydrophile, à base d'un copolymère
   a) d'un monomère allylique de formule
   $$CH_2=CH-CH_2-O-R-X_n$$
   dans laquelle ou bien R est un atome d'hydrogène et n = 0, ou bien R représente un reste hydrocarbure aliphatique de valence égale à (n+1) et contenant 1 à (n+4) atomes de carbone; les symboles X représentent des restes hydrophiles identiques ou différents du groupe des groupements hydroxyle ou des restes -(O-R')$_m$-OH, R' étant un reste éthylène ou propylène et m étant un nombre de 1 à 45; et n est un nombre entre 1 et 5, et
   b) de 10 à 90% en poids, par rapport au poids du copolymère, d'un monomère multifonctionnel dans lequel au moins deux groupements à insaturation éthylénique, susceptibles de polymérisation radicalaire, sont reliés par une chaîne contenant des groupements carboxamide,
   caractérisée en ce qu'elle est préparée par polymérisation en perles en phase inverse, une solution aqueuse ou hydro-alcoolique des monomères étant répartie en gouttelettes dans un milieu organique de miscibilité non illimitée avec l'eau et étant mise en polymérisation sous cette forme au moyen d'un amorceur radicalaire.

2. Matière de support hydrophile selon la revendication 1, caractérisée en ce qu'elle contient des motifs multifonctionnels du N,N'-méthylène-bis-(méth)acrylamide.

3. Matière de support hydrophile selon la revendication 1 ou 2, caractérisée en ce que les motifs du monomère allylique constituent une part de 10 à 90% en poids du copolymère.

4. Matière de support hydrophile selon l'une quelconque des revendications 1 à 3, caractérisée par une grosseur moyenne de particules de 3 à 1000 µm.

5. Procédé d'utilisation de la matière de support hydrophile selon l'une quelconque des revendications 1 à 4, caractérisé en ce qu'au moyen d'un agent d'activation bifonctionnel, on la fait passer dans un état actif dans lequel elle possède un pouvoir de liaison à l'égard de substances biologiquement actives, et on la fait réagir avec une telle substance.

6. Utilisation de la matière de support hydrophile selon l'une quelconque des revendications 1 à 4 pour l'adsorption d'une substance biologiquement active à partir d'un liquide aqueux.

7. Procédé d'utilisation selon la revendication 5 ou 6, caractérisé en ce que la matière de support hydrophile est placée dans une colonne susceptible d'être traversée par un écoulement.

8. Utilisation de la matière de support hydrophile selon l'une quelconque des revendications 1 à 4 comme phase stationnaire pour la chromatographie d'exclusion de grandeurs.

Fig. 1